# EUROPEAN PATENT APPLICATION

(11) **EP 1 122 195 A1**
(43) Date of publication of application: **08.08.2001**
(21) Application number: 00200374.7
(22) Date of filing: 04.02.2000
(51) Int. Cl.: B65G 47/14

(54) **High speed singulator and method therefor**

(71) Applicant: Qsort NV, 8810 Lichtervelde (BE)
(72) Inventor: Lambrecht, Henk, 8560 Gullegem (BE)
(74) Representative: Bird, William Edward

(57) **Abstract**

A high speed singulator and method of operating the same is described for items especially for agricultural products which includes a plurality of parallely moving transport conveyors, some of the conveyors travelling longitudinally at a faster speed than other conveyors and a loading device for loading items onto the plurality of conveyors. At least one activator is provided for moving an item from a slower moving conveyor onto a faster moving conveyor as well as a controller for determining a space between items on the faster conveyor for receiving the moved item and for actuating the actuator to move the item from the slower conveyor to the faster conveyor.

## Description

The present invention relates generally to an apparatus and a method for controlling the flow of objects, in particular agricultural products such as a fruit or vegetables into a singulator. The objects are preferably elongate, e.g. vegetables or fruit such as bananas, carrots, gherkins, cucumbers, turnips, parsnips, egg plants, rhubarb, celery but the present invention may also be applied to other objects such as beer bottles or mail letters or parcels.

### TECHNICAL BACKGROUND

The automatic high speed inspection of fruit and vegetables, e.g. for blemishes, deformities, ripeness, is preferably done within an inspection field into which each piece of fruit or vegetable enters the field individually. The device which transports fruit or vegetables into the inspection field one-at-a-time is usually called a singulator. One problem with a singulator is to attain an optimum distribution thereon. Each piece or object should have a certain minimum distance to the next one in order separate each piece of fruit in the inspection field sufficiently that each piece of fruit is individually measured or recognised without the next or previous fruit entering the field. On the other hand if there are large distance between the objects then the inspection device is not being used effectively or efficiently.

It is an object of the present invention to provide a singulator and a method of operating the same which has an improved and controllable efficiency/throughput compared with known systems.

It is a further object of the present invention to provide a singulator and a method of operating the same which has a controllable efficiency/throughput and high speed.

### SUMMARY OF THE INVENTION

According to an aspect of the present invention a singulator for items especially for agricultural products comprising:
a plurality of parallely moving transport conveyors, some of the conveyors travelling longitudinally at a faster speed than other conveyors;
a loading device for loading items onto the plurality of conveyors;
at least one activator for moving an item from a slower moving conveyor onto a faster moving conveyor; and
a controller for determining a space between items on the faster conveyor for receiving the moved item and for actuating the actuator to move the item from the slower conveyor to the faster conveyor. The loading device is preferably a shaker which may be located at one end of the transport conveyors. The conveyors are preferably of different lengths whereby the conveyor travelling the fastest is the longest conveyor. This results in all the items being arranged in line on the fastest conveyor before these items are discharged into processing area. If items travelling on slower conveyors do not have the opportunity to be moved to a faster conveyor by the time they reach the end of the relevant conveyor they may be taken from this conveyor and re-cycled to the loading device. In addition to the controller it is preferred if a series of sensors are provided which are located at suitable positions in order to determine the relative positions of the items on different conveyors. Preferably, the sensors are optical sensors. The information from the sensors may be used by the controller to determine the gaps on a faster conveyor into which an item from the next slower conveyor may be moved.

According to another aspect of the present invention there is provided a method of singling out items onto a conveyor, especially for agricultural products comprising the steps of:
transporting the items on a plurality of parallely moving transport conveyors;
driving some of the conveyors longitudinally at a faster speed than other conveyors; loading items onto the plurality of conveyors; and
determining a space between items on a faster conveyor for receiving an item from a neighbouring slower conveyor; and
actuating the actuator to move the item from the slower conveyor to the faster conveyor.

The dependent claims define further independent embodiments of the present invention.

The present invention will now be described in further detail, with reference to the following drawings.

### BRIEF DESCRIPTION OF THE DRAWINGS

Fig. 1 shows a schematic top-view representation of a singulator in accordance with an embodiment of the present invention.

Fig. 2 shows a detail of the singulator according to Fig. 1 wherein an object is not transferred to a faster track.

Fig. 3 shows a detail of the singulator according to Fig. 1 wherein an object is transferred to a faster track.

### DESCRIPTION OF THE ILLUSTRATIVE EMBODIMENTS

The present invention will be described with reference to certain embodiments and to certain drawings but the present invention is not limited thereto but only by the claims. The present invention will mainly be described with reference to the delivery of agricultural products but it is not restricted thereto but only by the claims.

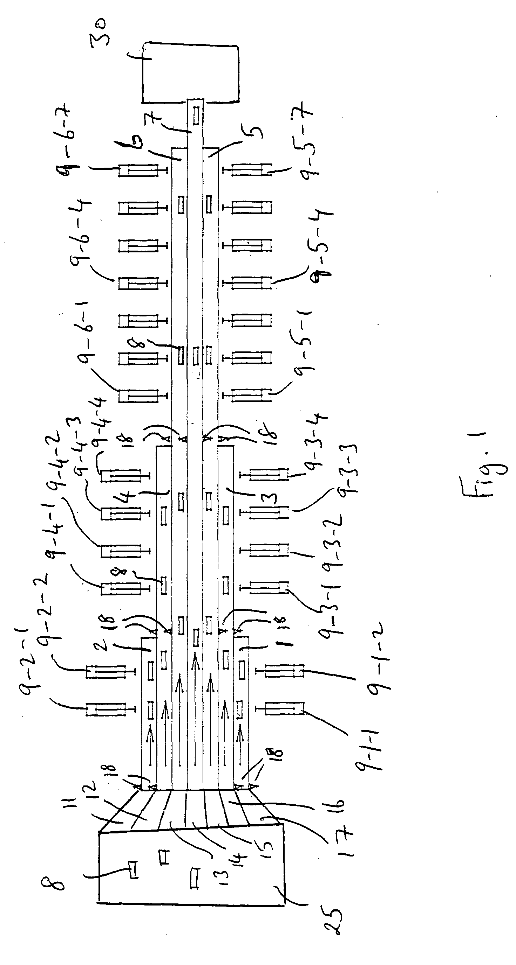

Fig. 1 shows a schematic top-view representation of a singulator 20 according to the present invention. Singulator 20 comprises a plurality of parallel hoizontal object transport tracks or lanes or conveyors or paths 1-7. Across the tracks 1-7 there is a gradient in speed as will be described in more detail below. The tracks 1-7 all move in the same direction, i.e. away from a delivery device, e.g. a vibrator 25 towards a further processing field 30 which may be an inspection zone. Singulator 20 is fed from the vibrator or shaker 25, e.g. a vibrator. Such a vibrator or shaker 25 receives a load of objects 8 at intervals or continuously and organises them, by an appropriate vibration, to move along a plurality of pathways which are aligned with the same number of tracks 1-7 of the singulator 10. The vibrator 25 discharges objects 8 onto the tracks 1-7. The vibrator 25 discharges the objects 8 via singulator entry ports 11 -17. In this respect the device 25 may be looked upon itself or described as a singulator or pre-singulator or pre-sorter before the main singulator 20. No limitation is expected on the design of the delivery device 25 provided the objects are delivered to the singulator 20 in a sufficiently ordered manner so that they can be transported away by the individual tracks of the singulator 1-7. Each of the transport tracks 1-7 may any suitable conveying device, e.g. a conveying band, a wire transporter (as known for instance from US 5,526,119), a slot transporter (e.g. a multilane transporter for mail as supplied by the Novak Company Inc.) or more specialised transporters using rollers and other devices for guiding agricultural products as are known, for instance, from US 5,020,675, or US 5,101,982 or US 4,091,931, in particular any transport system which allows parallely moving elongate transporters to move at different speeds and to move products from a more slowly moving transporter to a faster moving transporter. The tracks of 1-7 are preferably of different lengths, i.e. different extents starting from the delivery device 15 but the present invention is not limited thereto. Preferably, the slowest moving tracks such as 1 and 2 are the shortest and the high-speed delivery singulator track 7 is the longest being continuous right up to processing zone 30.

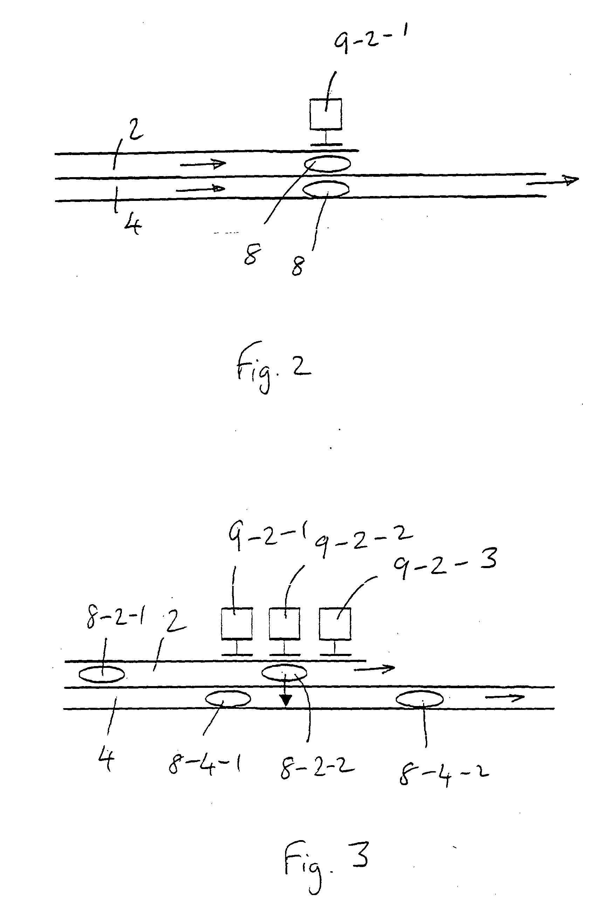

A plurality of actuators 9 are preferably distributed along the tracks 1-7. Each track 1-7 may have one or more actuators 9 along its length. For example, in Fig. 2 there are two actuators 9-2-1 and 9-2-2 on track 2, and seven actuators 9-6-1....9-6-7 on track 6. Actuators 9 are designed to transfer one object 8 from the nearest track 1-6 into the next most remote track 2-7. The actuators 9 may be any suitable actuator and may include pneumatically or hydraulically activated cylinders or arms, air blasts or jets, electromagnets developing a magnetic field which can push a conductive or magnetic object 8 onto a neighbouring track, grabs, robot arms and hands, vacuum ports etc. Although not shown in Fig. 1 there may be further actuators which expel an object 8 from the system, i.e. discard any object found to be not appropriate for entry into zone 30.

An aspect of the present invention is that for optimum operation of the fast track singulator 7, the objects 8 on this track should be spaced at an optimum distance before they enter zone 30. Generally, the vibrator 15 delivers objects to tracks 1-7 in a rather random way, i.e. there are sometimes big gaps between the objects on the tracks 1-7. the present invention uses this fact to push an object from a slower track onto the next higher speed track when such an opening is available. As shown in Fig. 2, both objects 8 on tracks 2 and 4 are opposite each other as they pass actuator 9-2-1. In this case object 8 on the slower track 1 is not pushed onto track 4. On the other hand as shown in Fig. 3, actuator 9-2-2 is in a position to push the object 8 -2-2 into a space on track 4 between objects 8-4-1 and 8-4-2. Note that as there is a difference in speed between tracks 2 and 4 (track 2 is slower) the relative position of the object 8-2-2 on track 2 and any object 8 on track 4 changes with time. This means that when the object 8-2-2 was opposite to actuator 9-2-1, it is possible that object 8-4-2 blocked the transfer of 8-2-2 to track 4, whereas when object 8-2-2 is opposite actuator 9-2-3 object 8-4-1 blocks transfer of object 8-2-2. This means that at various times windows of opportunity occur for the transfer of an object 8 to the next fastest track 1-7.

It is an aspect of the present invention to determine this window of opportunity for each object on a track 1-6 slower than the track 7. In order to achieve this "object position on a track" detectors (OPOT detectors) 18 are provide which detect the position of objects 8 on individual ones of the tracks 1-7. The detectors 18 may be any suitable detector such as, but not limited to, a colour sensor, infra-red or ultra-violet sensors, a light beam and an optical eye, whereby the passage of an object 8 interrupts the light beam, or an optical light reflection detection system, whereby the reflection of light from a light source by an object 8 is detected by a suitable photosensitive device, or the detectors 8 may be proximity sensors, e.g. magnet sensors, hall sensors, capacitive sensors, mechanical or pneumatic feelers or fine brushes whose disturbance by an object 8 can be detected.

The knowledge of an object 8 at a particular time and place on a particular track 1-7 as determined by a detector 18 is generally not sufficient to determine a window of opportunity for movement of an object 8. Preferably, the output of all the detectors 18 are fed to a control unit 19. This control unit 19 preferably includes local intelligence, e.g. a central processing unit, a microprocessor, a microcontroller, a portable computer, a workstation which is able to run a suitable algorithm to predict the relative positions of all the objects 8 on the tracks 1-7. The control unit 19 then determines based on the knowledge of the speeds of the individual tracks 1-7 and the positions of the objects 8 on all the tracks, when an object on a slower track 1-6 is optimally placed before an actuator 9 with a space available on the next faster track 2-7 and sends an actuating pulse to the relevant actuator 9 at the appropriate time to move the relevant object 8 to the next fastest track 2-7.

The control unit may receive the following initial inputs:
a) the speed of each track 1-7 or this may be continuously measured and input to the control unit 19,
b) the position of each actuator 9,
c) the position of each detector 18,
d) the allowed minimum spacing between objects on the fastest track 7.

The control unit 19 may run an algorithm which calculates not only single events, that is the movement of one object 8 from one track to another but series of events, e.g. how a particular object 8 will be transferred from one track over a plurality of tracks to track 7.

Note that any object 8 which reaches the end of a particular track 1-6 without there being a possibility of movement to a next fastest track may exit from the end of its own track onto a conveyor which returns it to delivery device 25.

By the gradual increase of item speed from a slower conveyor to a faster one depending on space being available for the item on the faster conveyor very high final speeds of the fastest conveyor can be achieved, e.g. final speed of 4 metres per second on a single conveyor when the shaker delivers items to the plurality of conveyors at a speed of 0.2 metres per second.

The embodiments of the present invention may be advantageously used with agricultural produce, e.g. elongate objects such as vegetables or fruit a non-limiting list of which is bananas, carrots, gherkins, cucumbers, turnips, parsnips, egg plants, rhubarb, celery but the present invention may also be applied to other objects such as beer bottles.

While the invention has been shown and described with reference to preferred embodiments, it will be understood by those skilled in the art that various changes or modifications in form and detail may be made without departing from the scope and spirit of this invention as defined in the attached claims. For instance, the singulator 10 described above has a symmetrical arrangements of tracks 1, 3, 5 on side and 2, 4, 6 on the other side of a central high speed track 7, however the present invention is not limited thereto. For example, the fastest track 7 may be on one side of the device 20 and a plurality of parallel slower tracks 1-6 may be arranged so that the fastest of these, e.g. track 6 abuts the track 7 and each track 1-5 abuts the previous one. The above invention has been described with reference to a linear singulator 20. However, the present invention may also be applied to other shapes of tracks 1-7, e.g. the tracks 1-7 may arranged in concentric circles or any other suitable form, e.g. in the form of a large race track. Further, the above invention has been described with reference to a delivery device 25 which is located at one point, but the present invention includes a plurality of delivery devices which may be distributed along the length of the singulator 20 so that there may be several entry ports to the tracks, 1-7. For instance there may be one entry port for each track 1-7 but these entry ports may be staggered in distance along the singulator 20 or there may be multiple entry ports for each track 1-7.

## Claims

1. A singulator for items especially for agricultural products comprising:
a plurality of parallely moving transport conveyors, some of the conveyors travelling longitudinally at a faster speed than other conveyors;
a loading device for loading items onto the plurality of conveyors;
at least one activator for moving an item from a slower moving conveyor onto a faster moving conveyor; and
a controller for determining a space between items on the faster conveyor for receiving the moved item and for actuating the actuator to move the item from the slower conveyor to the faster conveyor.

2. The singulator according to claim 1, wherein the loading device is a shaker.

3. The singulator according to claim 1 or 2, wherein the plurality of conveyors are of different lengths.

4. The singulator according to claim 3, wherein the conveyor travelling at the fastest speed is the longest conveyor.

5. The singulator according to claim 4, wherein items are discharged from the fastest conveyor into a processing area.

6. The singulator according to any of the claims 3 to 5, further adapted so that if an item on a first slower conveyor is not moved to a second faster conveyor by the time it reaches the end of the first conveyor the item is taken from the first conveyor and is returned to the loading device.

7. The singulator according to any previous claim, further comprising a plurality of sensors for detecting the positions of the items on different conveyors.

8. The singulator according to claim 7, wherein the sensors are optical sensors.

9. The singulator according to claim 7 or 8, wherein the controller is adapted to determine the space between items on a faster conveyor based on the outputs of the sensors.

10. A method of singling out items onto a conveyor, especially for agricultural products comprising the steps of:
transporting the items on a plurality of parallely moving transport conveyors;
driving some of the conveyors longitudinally at a faster speed than other conveyors; loading items onto the plurality of conveyors; and
determining a space between items on a faster conveyor for receiving an item from a neighbouring slower conveyor; and
actuating the actuator to move the item from the slower conveyor to the faster conveyor.
